# EUROPÄISCHE PATENTSCHRIFT

(11) **EP 2 816 329 B1**
(45) Veröffentlichungstag und Bekanntmachung des Hinweises auf die Patenterteilung: **31.08.2022**
(21) Anmeldenummer: 14002057.9
(22) Anmeldetag: 14.06.2014
(51) Int. Cl.: G01F 23/00, G01F 23/02

(54) **Vorrichtung zum Anzeigen und/oder Kontrollieren eines Fluidniveaus**
Device for displaying and/or controlling a fluid level
Dispositif d'affichage et/ou de contrôle d'un niveau de fluide

(30) Priorität: 20.06.2013 DE 102013010393
(43) Veröffentlichungstag der Anmeldung: 24.12.2014
(73) Patentinhaber: HYDAC Accessories GmbH, 66280 Sulzbach/Saar (DE)
(72) Erfinder: Käfer, Jürgen, 66578 Schiffweiler (DE); Meier, Pascal, 66538 Neunkirchen (DE)
(74) Vertreter: Bartels und Partner, Patentanwälte

(56) Entgegenhaltungen:
- DE-A1- 10 331 120
- DE-U- 1 785 798
- US-A- 2 624 308
- US-A- 4 454 759
- US-A- 5 628 231
- US-A- 5 673 722
- US-B1- 6 282 952

## Beschreibung

Die Erfindung betrifft eine Vorrichtung zum Anzeigen und/oder Kontrollieren von Fluiden mit den Merkmalen im Oberbegriff des Anspruchs 1.

Vorrichtungen dieser Art sind bekannt, vgl. beispielsweise DE 10 2009 007 655 A1 oder DE 10 2009 023 343 A1. Derartige Vorrichtungen dienen der Anzeige des Niveaus einer Flüssigkeit innerhalb eines Behälters, wobei die Vorrichtung außerhalb des Behälters angebracht, jedoch über mindestens einen Fluidanschluss mit diesem in der Art von kommunizierenden Röhren verbunden ist. Bei einer solchen Vorrichtung kann der jeweilige Füllstand optisch, beispielsweise durch visuelles Beobachten der Lage des innerhalb des Steigrohres sichtbaren Fluidpegels, erkannt werden, oder es kann, wie dies bei den bekannten, vorstehend genannten Vorrichtungen der Fall ist, die Anzeige des Füllstandes durch Beobachten der Lage eines im Steigrohr bewegbaren Schwimmkörpers gewonnen werden. Solche mit einem Schwimmkörper versehene Vorrichtungen können auch für eine Füllstandskontrolle benutzt werden, indem eine Sensoreinrichtung vorgesehen ist, die die Position des Schwimmkörpers innerhalb des Anzeigebereichs erkennt und bei einer vorgebbaren Position des Schwimmkörpers ein elektrisches Signal erzeugt, aufgrund dessen die bei Erreichen des betreffenden Füllstands notwendigen Aktionen manuell oder automatisch vorgenommen werden. Als Fluide, die mittels derartiger Vorrichtungen angezeigt und/oder kontrolliert werden sollen, kommen insbesondere Flüssigkeiten in Frage wie Hydraulikflüssigkeiten, Mineralöle, Kraftstoffe, Wasser-Öl-Emulsionen und dergleichen.

Die US 6 282 952 B1 offenbart eine Vorrichtung zum Anzeigen und/oder Kontrollieren von Fluiden, mit mindestens einem Anschluss, der in ein Steigrohr mündet, das eine visuelle Erkennung des Fluidniveaus in Form einer Füllstandsanzeige ergibt, wobei ein am unteren Ende des Steigrohres vorgesehener Anschluss einen eine axiale Fortsetzung des Steigrohres bildenden Durchgang aufweist, wobei auch ein am oberen Ende des Steigrohres vorgesehener Anschluss einen eine axiale Fortsetzung des Steigrohres bildenden Durchgang aufweist, wobei die Anschlüsse jeweils in Form eines vom Durchgang durchzogenen Anschlusskörpers ausgebildet sind, der mit einem Gewinde versehen ist, das mit einem Gewinde am zugeordneten Ende eines das Steigrohr hülsenartig umgebenden Gehäuses verschraubbar ist, wobei die Anschlusskörper als Rotationskörper mit koaxialem Durchgang und mit einem Außengewinde zur Verschraubung mit einem Innengewinde des Gehäuses ausgebildet sind, und wobei der Anschluss am oberen Ende des Steigrohres als Entlüftungsanschluss ausgebildet ist.

Durch das DE 1 785 798 U ist ein Schauglas als Flüssigkeitsstandanzeiger für den Einbau in Kältemitteilleitungen bekannt, bei dem eine Glasröhre innerhalb eines Schaudurchbrüche aufweisenden Mantelrohres zwischen in dieses von beiden Seiten her eingeschraubten Anschlussnippeln in deren Bohrungen abgedichtet gelagert ist, wobei die Glasröhre mittels eines Kunstharzklebstoffes in die Bohrungen der Anschlussnippel eingekittet ist. Das zylindrische Schauglas ist dabei mit seinen beiden gegenüberliegenden Enden in die Bohrungen der Einschraubstutzen der korrespondierenden Nippel eingesteckt und in seiner axialen Lage durch Schulterflächen der Nippelbohrungen gesichert. Ferner sind zur Sicherung der Füllung der Anzeigeeinrichtung zwischen die benachbarten Stirnseiten von Glasröhre und den Schultern der Nippelbohrungen Siebscheiben eingelegt.

Die DE 103 31 120 A1 betrifft einen Flüssigkeitsstandanzeiger mit einem Grundkörper, der an ein Tank-Gehäuse angeflanscht wird, um bevorratete Flüssigkeiten im Tank sichtbar zu machen und insbesondere den Flüssigkeitsstand innerhalb des jeweiligen Behälters anzuzeigen. Bei der bekannten Lösung wird ein Glasrohr von einem Schutzrohr ummantelt, in welches an beiden Enden winkelförmige Abschlusselemente mit Querbohrungen eingefügt sind, die in den Glaskörper hineinragen und mit einer Weichdichtung die Dichtheit zum Glaskörper hin herstellen. Zusätzliche Weichdichtungen sind notwendig um mittels einer Hohlschraube das jeweilige Abschlusselement in seinem eingeschobenen Zustand im Schau-Glaskörper in abdichtender Weise zu fixieren. Mit der bekannten Lösung ist es möglich, etwaige Toleranzen sowie betriebsbedingte Längenabweichungen derart zu kompensieren, dass keine Spannungen im Schauglas auftreten, die die Betriebssicherheit des Anzeigers gefährden können.

Die US 4 454 759, die US 5 628 231, die US 5 673 722 und die US 2 624 308 offenbaren weitere Vorrichtungen zum Anzeigen und/oder Kontrollieren von Fluiden.

Der Erfindung liegt die Aufgabe zugrunde, eine Vorrichtung der besagten Art zur Verfügung zu stellen, die sich durch eine besonders einfache Bauweise auszeichnet.

Erfindungsgemäß ist diese Aufgabe durch eine Vorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass die Anschlusskörper einen gegenüber dem Außengewinde im Durchmesser verkleinerten, koaxialen Ansatz aufweisen, der unter Bildung einer Abdichtung vom betreffenden Ende des Steigrohres übergriffen ist, und dass sich der Ansatz mit Zwischenlage eines O-Ringes passend in das dem jeweiligen Anschlusskörper zugewandte Ende des Steigrohres erstreckt.

Ferner ist vorgesehen, dass ein am unteren Ende des Steigrohres vorgesehener Anschluss einen eine axiale Fortsetzung des Steigrohres bildenden Durchgang aufweist. Während bei den Vorrichtungen des Standes der Technik, wie sie in den oben genannten Dokumenten teilweise offenbart sind, Fluidanschlüsse dadurch gebildet sind, dass in Endkörpern des Steigrohres von dessen Längsachse rechtwinklig abzweigende Fluiddurchgänge mittels Hohlschrauben gebildet sind, die die Endkörper senkrecht zur Achse durchgreifen, kommen bei der Erfindung Abzweigelemente wie Hohlschrauben und zugeordnete Dichtelemente in Wegfall, so dass die erfindungsgemäße Vorrichtung vergleichsweise einfacher und kostengünstiger herstellbar ist.

Dadurch, dass auch ein am oberen Ende des Steigrohres vorgesehener Anschluss einen eine axiale Fortsetzung des Steigrohres bildenden Durchgang aufweist, ist aufgrund dieser Bauweise die besonders vorteilhafte Möglichkeit eröffnet, die Anschlüsse jeweils in Form eines vom Durchgang durchzogenen Anschlusskörpers auszubilden, der mit einem Gewinde versehen ist, das mit einem Gewinde am zugeordneten Ende eines das Steigrohr hülsenartig umgebenden Gehäuses verschraubbar ist. In besonders vorteilhafter Weise erfüllen hierbei die Anschlusskörper nicht nur die Funktion der Fluidführung, sondern bilden gleichzeitig die wesentlichen, tragenden Elemente des das Steigrohr umgebenden Gehäuses. Die Gesamtstruktur der Vorrichtung lässt sich daher mit einer Mindestanzahl von Einzelteilen realisieren.

Bei besonders vorteilhaften Ausführungsbeispielen können die Anschlüsse am unteren und am oberen Ende des Steigrohres als Rohranschlüsse ausgebildet sein, beispielsweise mit einem Anschlussgewinde für Rohre. Dadurch ist die erfindungsgemäße Vorrichtung nicht nur als Anbauelement einsetzbar, das über die die Fluidführung bildenden Hohlschrauben an der Wand eines betreffenden Behälters anbringbar ist, sondern sie lässt sich am gewünschtem Beobachtungsort, vom Behälter weggebaut, anordnen.

Für eine besonders rationelle und kostengünstige Fertigung können die Rohranschlüsse am oberen und am unteren Ende des Steigrohres als Gleichteile gebildet sein.

Anstelle eines Rohranschlusses kann am oberen Ende des Steigrohres auch ein Entlüftungsanschluss vorgesehen sein, dessen Durchgang bei einem drucklosen Behälter, bei dem das Fluid unter Atmosphärendruck steht, unmittelbar mit der Außenatmosphäre in Verbindung sein kann.

In vorteilhafter Weise kann das das Steigrohr hülsenartig umgebende Gehäuse durch einen Rohrkörper gebildet sein, dessen Wand durch mindestens ein sich über zumindest einen Teil der Länge des Steigrohres erstreckendes Sichtfenster durchbrochen ist.

Mit Vorteil kann die Anordnung so getroffen sein, dass zusätzlich zu mindestens einem sich entlang einer Frontseite des Gehäuses erstreckenden Sichtfenster mindestens ein weiteres Sichtfenster an Seitenflächen und/oder an einer Rückseite des Gehäuses vorgesehen ist bzw. sind.

Das Steigrohr kann als Sichtrohr aus transparentem Kunststoff oder aus Glas gebildet sein. Für eine besonders gute Visualisierung des Fluidpegels kann im Steigrohr ein Schwimmkörper, vorzugsweise eine Hohlkugel oder ein geschäumter Schwimmer, vorgesehen sein. Weiterhin kann ein mit einer magnetischen Substanz versehener Schwimmkörper zur Betätigung eines Reed-Schalters vorgesehen sein, um bei entsprechender Position des Schwimmkörpers ein elektrisches Signal zu generieren.

Nachstehend ist die Erfindung anhand von in der Zeichnung dargestellten Ausführungsbeispielen im Einzelnen erläutert. Es zeigen:
- Fig. 1 und 2: perspektivische Schrägansichten eines ersten bzw. eines zweiten Ausführungsbeispiels der Erfindung;
- Fig. 3: eine Vorderansicht des ersten Ausführungsbeispiels von Fig. 1;
- Fig. 4: einen Längsschnitt des ersten Ausführungsbeispiels entsprechend der Schnittlinie IV-IV von Fig. 3;
- Fig. 5: eine Vorderansicht des zweiten Ausführungsbeispiels von Fig. 2;
- Fig. 6: einen Längsschnitt entsprechend der Schnittlinie VI-VI von Fig. 5;
- Fig. 7: in perspektivischer Schrägansicht drei unterschiedliche Gestaltungen des gesondert dargestellten Gehäuses für unterschiedliche Ausführungsbeispiele der Erfindung;
- Fig. 8: der Fig. 7 entsprechende Schrägansichten gesondert dargestellter Gehäuse mit gegenüber Fig. 7 größerer Baulänge;
- Fig. 9: einen Längsschnitt eines weiteren Ausführungsbeispiels der erfindungsgemäßen Vorrichtung;
- Fig. 10: eine vergrößert und explosionsartig auseinandergezogen gezeichnete perspektivische Schrägansicht des Entlüftungsanschlusses des Ausführungsbeispiels von Fig. 9;
- Fig. 11: eine stark vergrößerte Draufsicht eines Ventilgehäuseteils des Entlüftungsanschlusses des Ausführungsbeispiels von Fig. 9; und
- Fig. 12: eine Schnittdarstellung des Ventilgehäuseteils von Fig. 11 entsprechend der dort mit XII-XII angegebenen Schnittlinie.

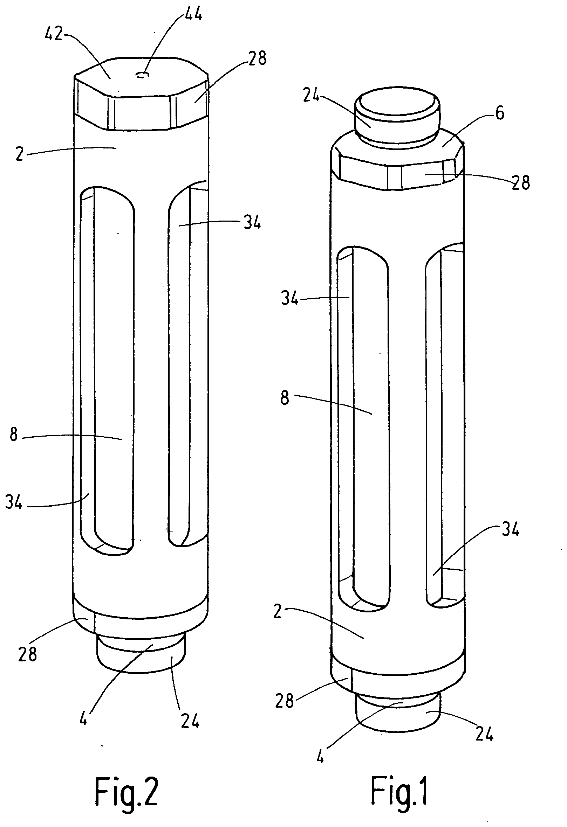

Die Fig. 1, 3 und 4 zeigen ein erstes Ausführungsbeispiel der erfindungsgemäßen Vorrichtung, bei dem am oberen und am unteren Ende eines Gehäuses 2 je ein Rohranschluss vorgesehen ist, von denen der den unteren Rohranschluss bildende Anschlusskörper mit 4 und der den oberen Rohranschluss bildende Anschlusskörper mit 6 bezeichnet sind. Die Anschlusskörper 4, 6 sind jeder mit einem Ende eines Steigrohres 8 in Fluidverbindung. Die Anschlusskörper 4 und 6 sind gleich ausgebildet. Über nicht gezeigte Rohrleitungen sind die Anschlusskörper 4, 6 mit einem Fluidbehälter (nicht dargestellt) verbindbar, wobei die Rohrleitung des unteren Anschlusskörpers 4 am Grund des Behälters und die Rohrleitung des oberen Anschlusskörper 6 oberhalb des betrieblichen Füllstandes in den Behälter einmünden. Das Gehäuse 2, das aus einem metallischen Werkstoff, wie Aluminium, Stahl oder Edelstahl, besteht, ist durch ein Rundrohr gebildet, das das Steigrohr 8 hülsenartig umgibt, das sich entlang der Hochachse 10 zwischen den Anschlusskörpern 4 und 6 erstreckt. Diese sind mit dem unteren bzw. dem oberen Ende des Gehäuses 2 verschraubt.

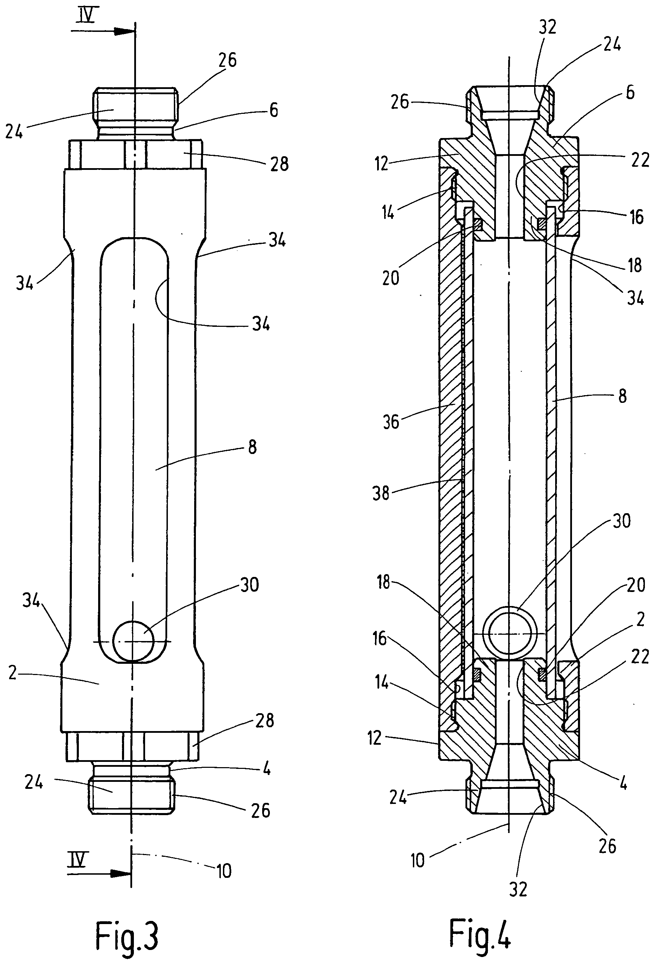

Die gleich ausgebildeten Anschlusskörper 4, 6, die, wie das Gehäuse 2, aus metallischem Werkstoff gebildet sind, sind als Drehkörper gestaltet, mit einem den größten Außendurchmesser aufweisenden, kreiszylindrischen Längenbereich 12, dessen Durchmesser dem Außendurchmesser des Rohres des Gehäuses 2 entspricht. An den Bereich 12 des größten Durchmessers schließt sich ein im Durchmesser verringerter Abschnitt mit einem Außengewinde 14 an, mit dem der jeweilige Anschlusskörper 4, 6 mit einem Innengewinde in einem im Innendurchmesser erweiterten Endabschnitt 16 des Rohrkörpers des Gehäuses 2 derart verschraubbar ist (siehe Fig. 4), dass das Ende des Rohrkörpers des Gehäuses 2 bündig an der Stufe anliegt, die am erweiterten Umfangsbereich 12 des jeweiligen Anschlusskörpers 4, 6 gebildet ist. Dabei geht der Außenumfang des Gehäuses 2 absatzlos in den Umfang des erweiterten Bereichs 12 über. An den Bereich des Außengewindes 14 schließt sich ein im Durchmesser weiter verringerter koaxialer Ansatz 18 an, der sich mit Zwischenlage eines O-Ringes 20 passend in das dem jeweiligen Anschlusskörper 4, 6 zugewandte Ende des Steigrohres 8 erstreckt. Ein koaxialer innerer Durchgang 22 in den Anschlusskörpern 4, 6 verbindet das Steigrohr 8 mit der Außenseite. An dieser sich an den größten Umfangsbereich 12 anschließenden Außenseite setzt sich der Durchgang 22 in einem im Durchmesser verringerten Rohranschlussteil 24 fort, das außenseitig mit einem Rohrgewinde 26 versehen ist und innenseitig einen Anschlusskonus 32 aufweist. Im Bereich des größten Durchmessers 12 sind die Anschlusskörper 4,6 mit einem Außensechskant 28 (Fig. 1 und 3) für den Angriff eines Schraubwerkzeuges versehen.

Das Steigrohr 8 ist als Sichtrohr aus einem durchsichtigen Kunststoff, wie Plexiglas, oder aus Mineralglas gebildet. Um die visuelle Erkennung des Fluidpegels zu erleichtern, ist im Inneren des Steigrohres 8 ein Schwimmkörper, beim gezeigten Beispiel in Form einer Hohlkugel 30, vorgesehen. Es versteht sich, dass Schwimmkörper anderer Art vorgesehen sein können, etwa in Form von Magnetschwimmern zur Betätigung von Reed-Schaltern, siehe DE 10 2009 023 343 A1.

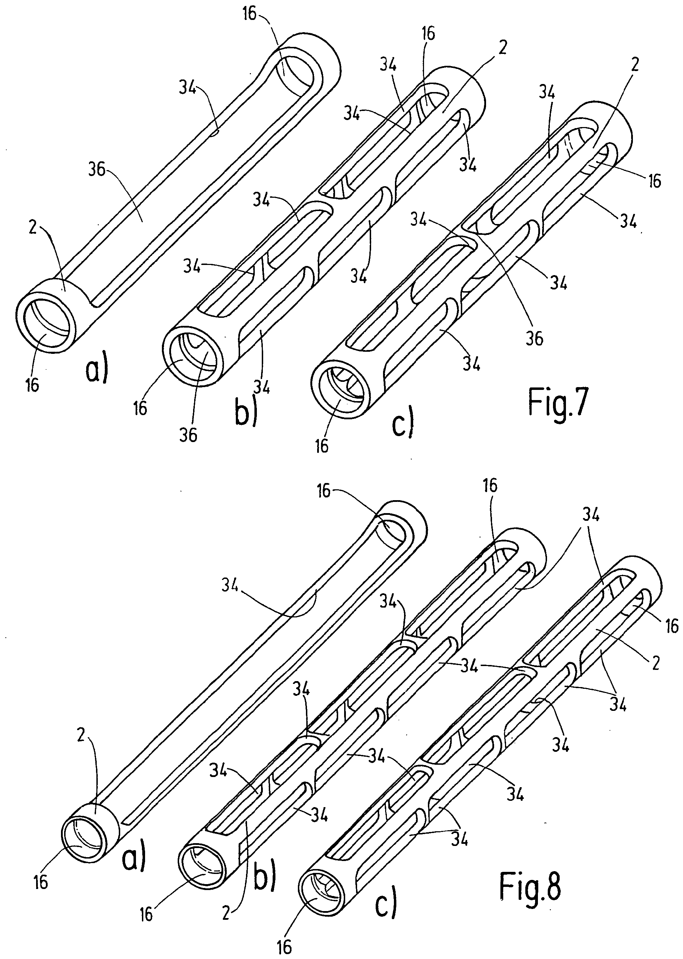

Für den optischen Zugang zum Steigrohr 8 ist das Gehäuse 2 mit zumindest einem Sichtfenster oder mit mehreren Sichtfenstern versehen. Die Fig. 7 verdeutlicht mehrere Varianten der Anordnung von Sichtfenstern 34. Wie ersichtlich, sind die Sichtfenster 34 jeweils in Form breiter Langlöcher mit abgerundeten Enden gestaltet. Dabei zeigt Fig. 7a) die Anordnung eines einzigen Sichtfensters 34, das sich im Wesentlichen über die gesamte Länge des Gehäuses 2 entlang einer Frontseite erstreckt. Bei Fig. 7b) ist eine Variante gezeigt, bei der an der Frontseite zwei voneinander durch einen Steg getrennte Sichtfenster 34 und an beiden Seiten drei aufeinanderfolgende Sichtfenster 34, jeweils durch einen Steg getrennt, vorgesehen sind. Bei Fig. 7a) und 7b) bildet das Gehäuse 2 jeweils eine geschlossene Rückwand 36 ohne Sichtfenster 34. Die Variante von Fig. 7c) unterscheidet sich dadurch, dass sowohl an der Frontseite als auch seitlich und auch an der Rückseite Sichtfenster 34 vorgesehen sind, dass also keine geschlossene Rückwand 36 vorhanden ist, wie dies bei den Varianten 7a) und 7b) sowie beim Ausführungsbeispiel von Fig. 1, 3 und 4 der Fall ist. Bei solchen Ausführungsbeispielen mit einer geschlossenen Rückwand 36 kann, wie dies in der Fig. 4 gezeigt ist, an der Rückwand 36 anliegend, zwischen dieser und dem Steigrohr 8 eine Kontrastfolie 38 eingelegt sein, die mit Markierungen, beispielsweise in Form einer Füllstandsskala oder einer kundenspezifischen Bedruckung versehen sein kann. Die Fig. 8a), 8b) und 8c) zeigen der Fig. 7 entsprechende Varianten der Anordnung von Sichtfenstern 34 für größere Baulängen der Vorrichtung, wobei, wie auch bei Fig. 7, der Übersichtlichkeit wegen nicht sämtliche Fenster 34 beziffert sind.

Die Fig. 2, 5 und 6 zeigen ein weiteres Ausführungsbeispiel der Vorrichtung, das sich von dem Ausführungsbeispiel von Fig. 1, 3 und 4 lediglich insofern unterscheidet, als anstelle des einen oberen Rohranschluss bildenden Anschlusskörpers 6 ein Entlüftungsanschluss mit einem Anschlusskörper 42 vorgesehen ist und dass Sichtfenster 34 auf vier einander gegenüberliegenden Seiten des Gehäuses 2 vorgesehen sind, so dass keine geschlossene Rückwand 36 für die Anlage einer Kontrastfolie 38 vorhanden ist. Der Anschlusskörper 42 des Entlüftungsanschlusses ist, wie die Anschlusskörper 4, 6 der Rohranschlüsse, von einem koaxialen Durchgang 44 durchzogen, der das Steigrohr 8 mit der Außenseite verbindet und, anders als der Durchgang 22 der Rohranschlüsse 4, 6, mit einem gleichbleibenden kleinen Durchmesser, der bei einer praktischen Ausführungsform einen Millimeter oder weniger beträgt, ausgebildet ist. Im Übrigen bildet auch der Anschlusskörper 42 des Entlüftungsanschlusses einen Rotationskörper, der, bei Wegfall des Rohranschlussteils 24, in seiner Form genau den Anschlusskörpern 4, 6 entspricht, also einen Schraubeinsatz für das betreffende Ende des Gehäuses 2 bildet, d.h. auch mit einem Ansatz 18 und O-Ring 20, einem Außengewinde 14 und einem Bereich 12 des größten Außendurchmessers, an dem ein Außensechskant 28 gebildet ist. Das Ausführungsbeispiel von Fig. 2, 5 und 6 braucht bei einem drucklosen Fluidbehälter, bei dem die Oberseite des Fluides im Behälter unter Atmosphärendruck steht, lediglich mit dem unteren Rohranschluss mit dem Fluidbehälters in dessen unterem Bereich verbunden zu sein. Demgegenüber kann das mit unterem Rohranschluss und oberem Rohranschluss versehene Ausführungsbeispiel von Fig. 1, 3 und 4 auch bei einem nicht drucklosen Fluidbehälter oder Tank zur Füllstandsanzeige benutzt werden, weil über die mit dem oberen Rohranschluss verbundene Leitung das entsprechende Druckniveau am oberen Ende des Steigrohres 8 gegeben ist.

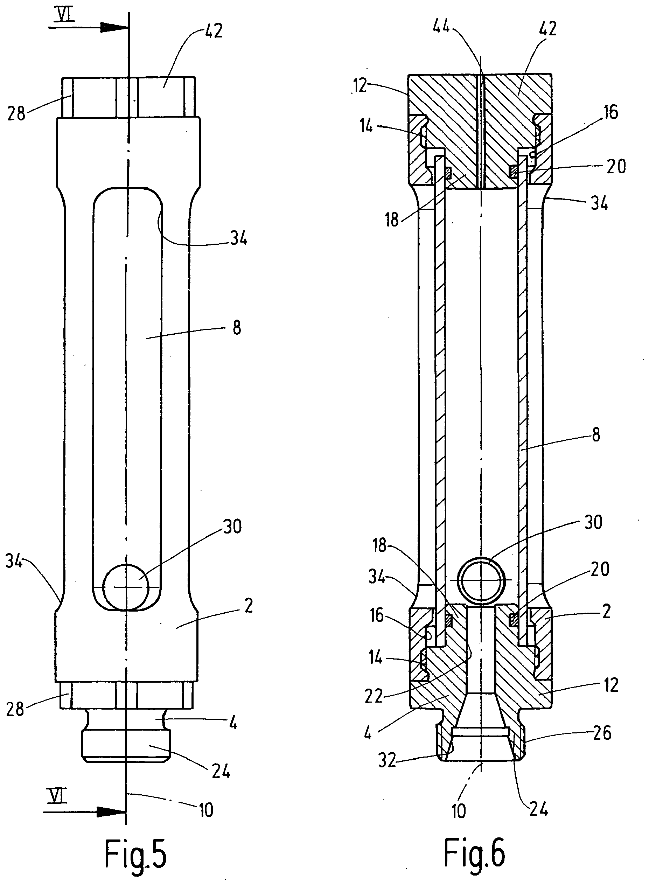

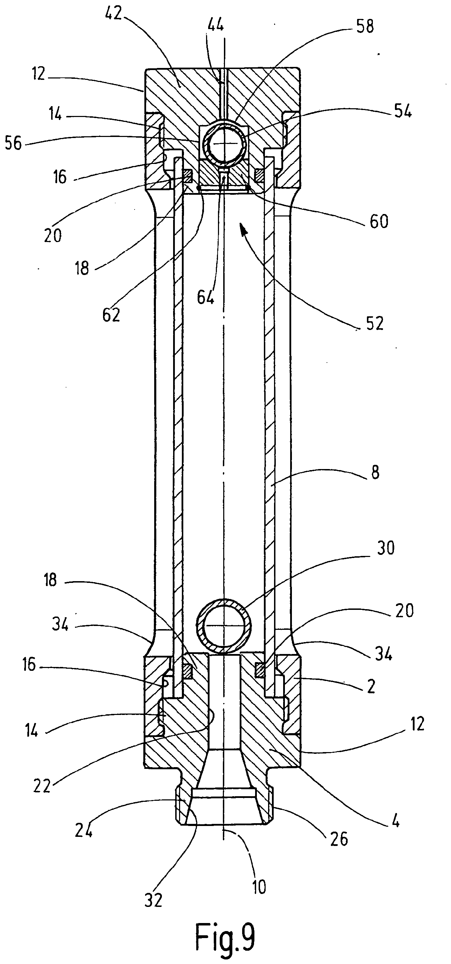

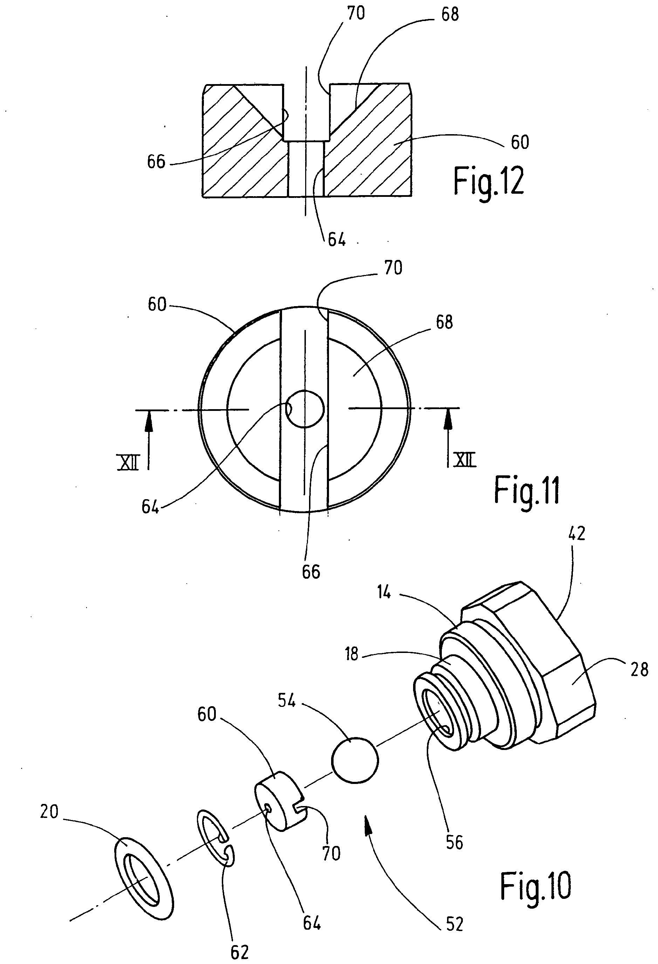

Die Fig. 9 bis 12 zeigen ein weiteres Ausführungsbeispiel, das sich von dem Beispiel von Fig. 6 lediglich dadurch unterscheidet, dass der Anschlusskörper 42 des Entlüftungsanschlusses mit einem Entlüftungsventil 52 versehen ist, dessen Einzelteile in Fig. 10 in vergrößerter Explosionsdarstellung gezeigt sind. Das Entlüftungsventil 52 weist in der Art eines Schwimmerventils als Schließkörper einen Schwimmer in Form einer Hohlkugel 54 auf, die in einer als Ventilgehäuse dienenden Bohrung 56 bewegbar ist, die sich vom freien Ende des Ansatzes 18 ausgehend in den Anschlusskörper 42 erstreckt und an ihrem Ende in den Durchgang 44 übergeht. Am Übergang der Bohrung 56 zu dem nach außen führenden Durchgang 44 bildet eine Wölbung 58 einen Ventilsitz, der den Durchgang 44 schließt, wenn die Hohlkugel 54 innerhalb der Bohrung 56 bei einem übermäßigen Ansteigen des Fluidpegels im Steigrohr aufschwimmt. Bei normalem Füllstand liegt die Hohlkugel 54 an einem Gehäuseteil 60 an, das im Eingangsteil der Bohrung 56 durch einen Sprengring 62 gesichert ist. In dem Gehäuseteil 60 befindet sich eine zentrale Bohrung 64, die als Fortsetzung des Durchgangs 44 eine Fluidverbindung zwischen dem Steigrohr 8 und der Bohrung 56 bildet. Dieses Gehäuseteil 60, auf dem die nicht aufschwimmende Hohlkugel 54 normalerweise aufliegt, ist, wie den Fig. 11 und 12 deutlich entnehmbar ist, im Anlagebereich der Hohlkugel 54 derart gestaltet, dass auch bei anliegender Hohlkugel 54 ein Luftdurchtritt vom Steigrohr 8 her über die Bohrung 64 zur Bohrung 56 hin und von dieser über den Durchgang 44 weiter zur Außenseite sichergestellt ist. Zu diesem Zweck bildet das Gehäuseteil 60 an der Oberseite einen konischen Trichter 68, innerhalb dessen sich eine durchgehende Quernut 66 erstreckt, so dass im Umfang des Gehäuseteils 60 diametral gegenüberliegende Lücken 70 gebildet sind und dementsprechend auch bei anliegender Hohlkugel 54 der Luftdurchgang von der Bohrung 64 zu dem nach außen führenden Durchgang 44 gewährleistet ist. Bei einem über den normalen Füllstand hinausgehenden Fluidpegel verschließt die aufschwimmende Hohlkugel 54 den Durchgang 44 durch Anlage an der den Ventilsitz bildenden Wölbung 58 am Ende der Bohrung 56.

## Patentansprüche

1. Vorrichtung zum Anzeigen und/oder Kontrollieren von Fluiden, mit mindestens einem Anschluss, der in ein Steigrohr (8) mündet, das eine visuelle Erkennung des Fluidniveaus in Form einer Füllstandsanzeige ergibt, wobei ein am unteren Ende des Steigrohres (8) vorhandener Anschluss einen eine axiale Fortsetzung des Steigrohres (8) bildenden Durchgang (22) aufweist, wobei ein am oberen Ende des Steigrohres (8) vorhandener Anschluss einen eine axiale Fortsetzung des Steigrohres (8) bildenden Durchgang (22, 44) aufweist, wobei die beiden Anschlüsse jeweils in Form eines vom Durchgang (22, 44) durchzogenen Anschlusskörpers (4, 6, 42) ausgebildet sind, der mit einem Gewinde (14) versehen ist, das mit einem Gewinde am zugeordneten Ende (16) eines das Steigrohr (8) hülsenartig umgebenden Gehäuses (2) verschraubbar ist, und wobei die Anschlusskörper (4, 6, 42) als Rotationskörper mit koaxialem Durchgang (22, 44) und mit einem Außengewinde (14) zur Verschraubung mit einem Innengewinde des Gehäuses (2) ausgebildet sind, **dadurch gekennzeichnet, dass** die Anschlusskörper (4, 6, 42) einen gegenüber dem Außengewinde (14) im Durchmesser verkleinerten, koaxialen Ansatz (18) aufweisen, der unter Bildung einer Abdichtung vom betreffenden Ende des Steigrohres (8) übergriffen ist, und dass sich der Ansatz (18) mit Zwischenlage eines O-Ringes (20) passend in das dem jeweiligen Anschlusskörper (4, 6) zugewandte Ende des Steigrohres (8) erstreckt.

2. Vorrichtung nach Anspruch 1, **dadurch gekennzeichnet, dass** die Anschlüsse am unteren und am oberen Ende des Steigrohres als Rohranschlüsse, vorzugsweise mit einem Anschlussgewinde (26) ausgebildet sind.

3. Vorrichtung nach Anspruch 1 oder 2, **dadurch gekennzeichnet, dass** die Rohranschlüsse (4, 6) durch Gleichteile gebildet sind.

4. Vorrichtung nach einem der vorstehenden Ansprüche, **dadurch gekennzeichnet, dass** der Anschluss am oberen Ende des Steigrohres (8) als Entlüftungsanschluss (42) ausgebildet ist.

5. Vorrichtung nach einem der vorstehenden Ansprüche, **dadurch gekennzeichnet, dass** der Entlüftungsanschluss (42) ein Entlüftungsventil (52) in der Art eines Schwimmerventils aufweist.

6. Vorrichtung nach einem der vorstehenden Ansprüche, **dadurch gekennzeichnet, dass** das das Steigrohr (8) hülsenartig umgebende Gehäuse (2) durch einen Rohrkörper gebildet ist, dessen Wand durch mindestens ein sich über zumindest einen Teil der Länge des Steigrohres (8) erstreckendes Sichtfenster (34) durchbrochen ist.

7. Vorrichtung nach einem der vorstehenden Ansprüche, **dadurch gekennzeichnet, dass** zusätzlich zu mindestens einem sich entlang einer Frontseite des Gehäuses (2) erstreckenden Sichtfenster (34) zumindest ein weiteres Sichtfenster (34) an Seitenflächen und/oder an einer Rückseite des Gehäuses (2) vorgesehen ist bzw. sind.

8. Vorrichtung nach einem der vorstehenden Ansprüche, **dadurch gekennzeichnet, dass** ein Steigrohr (8) in Form eines Sichtrohres aus transparentem Kunststoff oder aus Glas vorgesehen ist.

9. Vorrichtung nach einem der vorstehenden Ansprüche, **dadurch gekennzeichnet, dass** im Steigrohr (8) ein Schwimmkörper (30), vorzugsweise eine Hohlkugel oder ein geschäumter Schwimmer, vorgesehen ist.

10. Vorrichtung nach einem der vorstehenden Ansprüche, **dadurch gekennzeichnet, dass** zwischen einer Rückwand (36) des Gehäuses (2) und dem Steigrohr (8) eine einen optischen Kontrast bildende Fläche (38) vorgesehen ist.

## Claims

1. Device for displaying and/or checking fluids, having at least one connection which opens into a riser tube (8) that results in visual detection of the fluid level in the form of a level indicator, wherein a connection present at the lower end of the riser tube (8) has a passage (22) forming an axial continuation of the riser tube (8), wherein a connection present at the upper end of the riser tube (8) has a passage (22, 44) forming an axial continuation of the riser tube (8), wherein the two connections are each configured in the form of a connection body (4, 6, 42) through which the passage (22, 44) passes, said connection body being provided with a thread (14) which can be screwed to a thread on the associated end (16) of a housing (2) which surrounds the riser tube (8) in the manner of a sleeve, and wherein the connection bodies (4, 6, 42) are configured as solids of revolution with a coaxial passage (22, 44) and with an external thread (14) for screwing to an internal thread of the housing (2), **characterised in that** the connection bodies (4, 6, 42) have a coaxial projection (18) of reduced diameter compared to the external thread (14), which projection is overlapped by the relevant end of the riser tube (8) forming a seal, and **in that** the projection (18) with intermediate layer of an O-ring (20) extends fittingly into the end of the riser tube (8) directed towards the respective connection body (4, 6).

2. Device according to claim 1, **characterised in that** the connections at the lower and upper end of the riser tube are configured as pipe connections, preferably with a connecting thread (26).

3. Device according to claim 1 or 2, **characterised in that** the pipe connections (4, 6) are formed by identical parts.

4. Device according to one of the preceding claims, **characterised in that** the connection at the upper end of the riser tube (8) is configured as a vent connection (42).

5. Device according to one of the preceding claims, **characterised in that** the vent connection (42) has a vent valve (52) in the manner of a float valve.

6. Device according to one of the preceding claims, **characterised in that** the housing (2) surrounding the riser tube (8) in the manner of a sleeve is formed by a pipe body, the wall of which is pierced by at least one viewing window (34) which extends over at least part of the length of the riser tube (8).

7. Device according to one of the preceding claims, **characterised in that**, in addition to at least one viewing window (34) extending along a front side of the housing (2), at least one further viewing window (34) is or are provided on side surfaces and/or on a rear side of the housing (2).

8. Device according to one of the preceding claims, **characterised in that** a riser tube (8) in the form of a viewing tube made of transparent plastic or glass is provided.

9. Device according to one of the preceding claims, **characterised in that** a floating body (30), preferably a hollow sphere or a foamed float, is provided in the riser tube (8).

10. Device according to one of the preceding claims, **characterised in that** a surface (38) forming a visual contrast is provided between a rear wall (36) of the housing (2) and the riser tube (8).

## Revendications

1. Dispositif d'affichage et/ou de contrôle de fluides, comprenant au moins un raccord, qui débouche dans un tuyau (8) ascendant permettant une détection visuelle du niveau du fluide sous la forme d'une indication de niveau, dans lequel un raccord présent à l'extrémité inférieure du tuyau (8) ascendant a un passage (22) formant un prolongement axial du tuyau (8) ascendant, dans lequel un raccord présent à l'extrémité supérieure du tuyau (8) ascendant a un passage (22, 44) formant un prolongement axial du tuyau (8) ascendant, dans lequel les deux raccords sont constitués chacun sous la forme d'un corps (4, 6, 42) de raccordement traversé par le passage (22, 44) et pourvu d'un filetage (14), qui peut se visser avec un filetage à l'extrémité (16) associée d'une enveloppe (2) entourant à la manière d'une gaine le tuyau (8) ascendant, et dans lequel les corps (4, 6, 42) de raccordement sont constitués sous la forme de corps de révolution à passage (22, 44) coaxial et ayant un filetage (14) extérieur de vissage avec un taraudage de l'enveloppe (2), **caractérisé en ce que** les corps (4, 6, 42) de raccordement ont une bout (18) coaxial, rapetissé en diamètre par rapport au filetage (14) extérieur, qui, en formant une étanchéité, est chevauché par l'extrémité concernée du tuyau (8) ascendant, et **en ce que** le bout (18) s'étend, avec interposition d'un joint (20) torique de manière adaptée, dans l'extrémité du tuyau (8) ascendant, tournée vers le corps (4, 6) respectif de raccordement.

2. Dispositif suivant la revendication 1, **caractérisé en ce que** les raccords sont constitués, à l'extrémité inférieure et à l'extrémité supérieure du tuyau ascendant, sous la forme de raccords tubulaires, ayant de préférence un filetage (26) de raccord.

3. Dispositif suivant la revendication 1 ou 2, **caractérisé en ce que** les raccords (4, 6) tubulaires sont formés de pièces pareilles.

4. Procédé suivant l'une des revendications précédentes, **caractérisé en ce que** le raccord, à l'extrémité supérieure du tuyau (8) ascendant, est constitué sous la forme d'un raccord (42) de mise à l'atmosphère.

5. Procédé suivant l'une des revendications précédentes, **caractérisé en ce que** le raccord (42) de mise à l'atmosphère a une soupape (52) de mise à l'atmosphère à la manière d'une soupape à flotteur.

6. Procédé suivant l'une des revendications précédentes, **caractérisé en ce que** l'enveloppe (2) entourant le tuyau (8) ascendant à la manière d'une gaine est formée d'un corps tubulaire, dont la paroi est interrompue par au moins un hublot (34) s'étendant sur au moins une partie de la longueur du tuyau (8) ascendant.

7. Procédé suivant l'une des revendications précédentes, **caractérisé en ce que**, en plus d'au moins un hublot (34) s'étendant le long d'un côté avant de l'enveloppe (2), il est prévu au moins un autre hublot (34) sur des surfaces latérales et/ou sur un côté arrière de l'enveloppe (2).

8. Procédé suivant l'une des revendications précédentes, **caractérisé en ce qu'**il est prévu un tuyau (8) ascendant sous la forme d'un tuyau de visualisation en matière plastique transparente ou en verre.

9. Procédé suivant l'une des revendications précédentes, **caractérisé en ce qu'**il est prévu, dans le tuyau (8) ascendant, un corps (30) flottant, de préférence une sphère creuse ou un flotteur en mousse.

10. Procédé suivant l'une des revendications précédentes, **caractérisé en ce qu'**il est prévu une surface (38) formant un contraste optique entre une paroi (36) arrière de l'enveloppe (2) et le tuyau (8) ascendant.
